(19) Europäisches Patentamt
European Patent Office
Office européen des brevets

(11) Veröffentlichungsnummer: **0 010 670**
**B1**

(12) # EUROPÄISCHE PATENTSCHRIFT

(45) Veröffentlichungstag der Patentschrift: **23.02.83**

(51) Int. Cl.³: **C 09 D 5/40,** C 25 D 13/06, C 08 G 18/08, C 08 G 18/80

(21) Anmeldenummer: **79103961.3**

(22) Anmeldetag: **15.10.79**

(54) **Verfahren zur Herstellung kathodisch abscheidbarer Elektrotauchlackbindemittel.**

(30) Priorität: **23.10.78 DE 2845988**

(43) Veröffentlichungstag der Anmeldung: **14.05.80 Patentblatt 80/10**

(45) Bekanntmachung des Hinweises auf die Patenterteilung: **23.02.83 Patentblatt 83/8**

(84) Benannte Vertragsstaaten: **AT CH DE FR GB IT NL**

(56) Entgegenhaltungen:
**DE-A-2 632 708**
**FR-A-2 158 033**
**US-A-4 017 438**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Kempter, Fritz Erdmann, Dr. Dipl.-Chem., L 2,14, D-6800 Mannheim (DE)**
Erfinder: **Schupp, Eberhard, Dr. Dipl.-Chem., Tilsiter Weg 4, D-6830 Schwetzingen (DE)**
Erfinder: **Gulbins, Erich, Dr. Dipl.-Chem., Ladenburger Strasse 80, D-6900 Heidelberg-Neuenheim (DE)**

**EP 0 010 670 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung kathodisch abscheidbarer Elektrotauchlackbindemittel

Die vorliegende Erfindung betrifft ein neues Verfahren zur Herstellung selbstvernetzender kathodisch abscheidbarer Elektrotauchlackbindemittel durch Umsetzung von verkappte Isocyanatgruppen enthaltenden Polyätherpolyolen mit Polyaminen und Protonierung mit Säuren.

Oberflächenbeschichtungskompositionen, die durch die Reaktion geblockter Isocyanatgruppen mit Aminogruppen gehärtet werden, sind seit langem bekannt; eine derartige Reaktion ist z.B. in der US-A 3 995 531 beschrieben worden.

Eine weitere Bechichtungskomposition für die kationische Elektrotauchlackierung ist in der GP-A 1 302 328 mitgeteilt.

Kationische Bindemittel für die Elektrotauchlackierung, denen diese Vernetzungsart zumindest teilweise zugrunde gelegt ist, sind z.B. in der FR-A-2 158 033, den DE-A 2 265 195, 2 603 666, 2 541 234 und 2 715 259 beschrieben worden.

Allen Produkten, die nach diesen zitierten Druckschriften hergestellt werden können, ist das Vorhandensein von tert. Aminogruppen im kationischen Bindemittel bzw. den Lackbädern, die aus diesen Bindemitteln hergestellt wurden, gemeinsam, als Folge des allgemeinen Herstellungsverfahrens, welches auf der Umsetzung einer Epoxid- mit irgendeiner Amino-Gruppe

$$[HN-R] \atop {|\atop R^1}$$

$R^1$ = H, Alkyl beruht.

Aufgabe der vorliegenden Erfindung ist es, ein vorteilhaft durchführbares Verfahren zur Herstellung kathodisch abscheidbarer Elektrotauchlackbindemittel aufzuzeigen, die Überzüge mit sehr guten Eigenschaften ergeben.

Gegenstand der vorliegenden Erfindung ist ein Verfahren zur Herstellung selbstvernetzender kathodisch abscheidbarer Elektrotauchlackbindemittel durch Umsetzung von gegebenenfalls Thiogruppen enthaltenden Polyätherpolyolen mit halbverkappten Diisocyanaten oder teilverkappten Polyisocyanaten, das dadurch gekennzeichnet ist, dass die verkappte Isocyanatgruppierungen enthaltenden Umsetzungsprodukte (A) mit einem Polyamin (B), dessen Aminogruppen gegebenenfalls teilweise als Ketimingruppen vorliegen, so zur Reaktion gebracht werden, dass mindestens eine primäre und/oder sekundäre Aminogruppe des Polyamins (B) mit einer verkappten Isocyanatgruppe des Umsetzungsproduktes (A) eine Harnstoffgruppe bildet, und das selbstvernetzende Umsetzungsprodukt aus (A) und (B) in üblicher Weise durch Protonierung mit einer Säure in wasserverdünnbare Form überführt wird. Die erfindungsgemässen Bindemittel enthalten als vernetzungsaktive Gruppierungen geblockte Urethangruppen und sekundäre und/oder primäre Aminogruppen sowie die bei dem erfindungsgemässen Herstellungsverfahren entstehenden Harnstoffgruppierungen.

Im Gegensatz zu den Verfahren des vorbekannten Standes der Technik ermöglicht es das erfindungsgemässe Verfahren, zu Produkten zu gelangen, deren kationischer Charakter ausschliesslich von primären oder sekundären Aminogruppen herrührt.

Eine überraschende Beobachtung bei der Durchführung dieses neuen Herstellungsverfahrens ist die Einfachheit der Reaktion bei unerwartet niedrigen Reaktionstemperaturen von 50 bis 120°C für die Reaktionspartner verkappte Isocyanatgruppe und Aminogruppe, selbst wenn keine der üblichen Reaktionskatalysatoren anwesend sind und wenn primärer Alkohol mit normalerweise höheren Entblockungstemperaturen als Blockierungs- bzw. Verkappungsmittel verwendet wird.

Dadurch wird die Lösung einer wesentlichen Aufgabe, nämlich die Steuerung der Verfahrensreaktion zu den erfindungsgemässen selbstvernetzenden Bindemitteln gewährleistet.

Ein Vorteil der durch das erfindungsgemässe Verfahren hergestellten Bindemittel ist ausserdem die Möglichkeit zu Bindemitteln zu gelangen, die durch eine hohe Funktionalität hinsichtlich der geblockten Isocyanat- und Amino-Gruppen gekennzeichnet sind. Ein weiterer Vorteil ist die Vielzahl von Modifizierungs- und Kombinations-Möglichkeiten der Komponenten (A) und (B).

Wie schon angedeutet, besteht die obengenannte Notwendigkeit (Einbau tert. Stickstoffs) für die nach dem erfindungsgemässen Verfahren hergestellten Bindemittel nicht, d.h. alle basischen d.h. kationischen Gruppierungen sind potentiell der Vernetzung zugänglich und verlieren dadurch ihren basischen Charakter.

Das erfindungsgemässe Herstellungsverfahren für kationische Elektrotauchlackbindemittel wird auf der Grundlage der Reaktion zwischen geblockten Isocyanatgruppen und sekundären und/oder primären Aminogruppen durchgeführt. Es beruht damit auf dem gleichen Prinzip wie die angestrebte Vernetzungsreaktion zur Härtung auf den beschichteten Substraten. Die Nutzungsmöglichkeit der Vernetzungsreaktion zur Herstellung der kationischen Bindemittel ist insofern überraschend, als z.B. in der DE-B 2 252 536 (Spalte 6, Absatz 3) = FR-A-2 158 033 ausdrücklich darauf hingewiesen wird, die geblockten Isocyanatgruppen bei der dort beschriebenen Umsetzung zu erhalten.

Die Herstellung der Bindemittel erfolgt im allgemeinen bei Temperaturen von 50 bis 140°C, bevorzugt bei 70 bis 120°C. Bei der unter Harnstoffbrückenbildung verlaufenden Umsetzung der Amino- und geblockten Isocyanat-Gruppen wird das Blockierungsmittel abgespalten und verbleibt als Lösungsmittel in der Reaktionsmischung oder wird entfernt, wenn es seine Flüchtigkeit zulässt bzw. wenn unter vermindertem

Druck gearbeitet wird, was durchaus möglich ist und zu lösungsmittelfreien Umsetzungsprodukten führt. Die Vernetzungsreaktion verläuft mit genügender Geschwindigkeit im Temperaturbereich 160–200°C, bevorzugt 170–180°C. Die Trennung der Reaktion der Bindemittelherstellung von der Vernetzung lässt sich darüber hinaus durch andere technische und chemische Massnahmen unterstützen, z.B. a) durch Herabsetzen der Reaktionstemperatur nach Erreichen des gewünschten Umsetzungsgrades, der sich meistens durch das Erreichen einer bestimmten Viskosität charakterisieren lässt, b) durch Protonieren und Verdünnen mit Säuren und Lösungsmitteln bzw. Wasser. Dabei können die unter a) und b) genannten Massnahmen miteinander kombiniert werden. Zu den chemischen Massnahmen gehört auch die Möglichkeit, Polyamine einzusetzen, die z.T. durch Ketimingruppen blockiert sind, oder die Blockierung verbleibender Aminogruppen im Molekül nach der Herstellung der Bindemittel mit Ketonen zu Ketimingruppen durchzuführen, wobei die Blockierung eine temporäre Massnahme ist und spätestens bei Anwesenheit von Wasser wieder aufgehoben wird.

Technisch sind Bindemittelherstellung und Vernetzungsreaktion eindeutig voneinander abgegrenzt. Erstere ist charakterisiert durch z.B. die Wasserdispergierbarkeit und die Verlaufseigenschaften der abgeschiedenen Bindemittel. Die Vernetzung des Bindemittels führt zu Lösungsmittelfestigkeit (besonders gegen Aceton) und mechanischen – und korrosionsschützenden – Eigenschaften der Beschichtung auf den verschiedensten Substraten, wie behandelten und unbehandelten Stählen.

Dabei können die verschiedenen Vorbehandlungsverfahren auch einen gewissen Einfluss haben und in ihrer Wirksamkeit oft vom Vernetzungsgrad der Überzüge abhängen. Die Harzbildungsreaktion verläuft im bevorzugten Temperaturbereich von 70–120°C. Die Reaktion ist im allgemeinen durch einen Viskositätsanstieg der Reaktionsmischung erkennbar. Bei Verwendung hochfunktioneller Polyamine lässt sich der charakteristische Viskositätsanstieg recht gut mit dem Reaktionsfortgang vergleichen, denn die Viskositätskurve zeigt für die Umsetzung der 1. Aminogruppe des Polyamins einen schwächeren, fast linearen Verlauf; in dem Masse wie weitere Aminogruppen des Polyamins in Reaktion treten, steigt die Viskosität deutlich schneller, in angenähert exponentieller Form an. Im allgemeinen besitzen die Bindemittel beim Übergang des linearen in den Bereich des angenähert exponentiell verlaufenden Viskositätsanstiegs bereits gute anwendungstechnische Eigenschaften, z.B. die notwendige Dispergierbarkeit in Wasser, Spannungsfestigkeit, oder Verlaufseigenschaften. Es kann aber sehr erwünscht sein, die Reaktion weiterzuführen und dann abzubrechen, wenn ein bestimmter höherer Kondensationsgrad erreicht wurde. Dadurch wird z.B. das Tragevermögen für aus irgendwelchen anderen Gründen zuzusetzende neutrale Bindemittel erhöht; desgleichen wird die Spannungsfestigkeit verbessert und die Reststromdichte vermindert.

Letztenendes hängt der Viskositätsanstieg aber von der Menge der reagierenden Gruppen ab. So kann man beispielsweise bei einer vorgegebenen Temperatur, z.B. im Bereich von 70–110°C den Viskositätsanstieg auch mit fortschreitender Reaktion verlangsamen, wenn man wahlweise die Menge der geblockten Isocyanatgruppen oder Aminogruppen reduziert.

Da die eingebauten Blockierungsmittel bei der Harzbildungsreaktion und der Vernetzungsreaktion benötigt werden, kann es sehr vorteilhaft sein, jeweils Blockierungsmittel einzusetzen, die für den entsprechenden Reaktionsschritt besonders geeignet sind. Man kann z.B. für die Harzbildung und für die Vernetzungsreaktion jeweils verschiedene Blockierungsmittel wählen, die den bei diesem Reaktionsschritt gestellten Anforderungen besser angepasst sind.

Blockierungsmittel, welche die erfindungsgemässe Reaktion zu den kathodisch abscheidbaren Bindemitteln besonders gut gewährleisten, sind: Ätheralkohole wie Äthylglykol und 1-Methoxypropanol-2; aber auch die bei niedrigen Temperaturen entblockenden Oxime oder Phenole sind als Blockierungsmittel geeignet. Bei Entblockung kann auch teilweise Abspaltung vom Polyätherpolyol und damit Übertragung des geblockten Isocyanats auf das Polyamin (B) eintreten. Um dieser Nebenreaktion vorzubeugen, ist es besonders vorteilhaft, anteilweise z.B. die niedrig entblockenden Phenole, Phthalimid, Imidazol und/oder Ketoxime mitzuverwenden.

Da bei der Herstellung des Umsetzungsproduktes aus (A) und (B) diese Blockierungsmittel einerseits bevorzugt abgespalten werden, andererseits zum Teil wegen ihrer physiologischen Eigenschaften in den Lackbädern unerwünscht sind, können sie durch Umsetzung mit Epoxidverbindungen, z.B. Monoepoxide, wie Äthylenoxid und Propylenoxid oder Polyepoxide in physiologisch einwandfreie, lösungsmittel- oder weichmacherartige Verbindungen überführt werden.

Das setzt allerdings voraus, dass die Aminogruppen des Polyamins (B) teilweise durch Ketimingruppen gegen die Reaktion mit den Epoxidverbindungen geschützt sind. Wählt man Blokkierungsmittelgemische für die Harzbildungsreaktion, so lassen sich selbstverständlich Reaktions-Zeiten und/oder -Temperaturen wunschgemäss beeinflussen. Das gilt auch für die die angestrebte Reaktion katalysierenden Substanzen wie die Acetate, Naphthenate, Oleate des Zinns, Blei, Zink, Zirkon, Cobalt, Nickel und Kupfer.

Zu den einzelnen Einsatzstoffen für das erfindungsgemässe Herstellungsverfahren ist folgendes auszuführen:

(A) Mit dem Begriff «Umsetzungsprodukt A» sind ganz allgemein geblockte Isocyanatgruppen enthaltende Umsetzungsprodukte aus gegebenenfalls Thiogruppen enthaltenden Polyätherpolyolen und teilgeblockten mehrwertigen Isocyanaten zu verstehen.

Dabei können die hierzu verwendbaren Polyätherpolyole aus sehr unterschiedlichen Einsatzstoffklassen ausgewählt werden. Grundsätzlich können auch die Äthergruppen -O- teilweise durch andere Heteroatome (-S-, -N-) ersetzt sein. Eine sehr geeignete Gruppierung dieser Art ist die Thioäthergruppierung (-S-). Erfindungsgemäss verwendbare Polyätherpolyole sind leicht zugänglich durch vollständige Umsetzung der Epoxidgruppen von aromatischen und aliphatischen Epoxidverbindungen, die bereits alkoholische OH-Gruppen tragen können, mit geeigneten Substanzen der allgemeinen Formel HXR, wobei X für -O-, -S-, $[-O-CH_2-CH_2-]_n$ oder

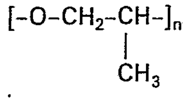

steht, n eine ganze Zahl von 1 bis 3 bedeutet und R für einen Alkylrest mit 1 bis 12 vorzugsweise 1 bis 10 Kohlenstoffatome oder einen der Reste $-CH_2-CH_2-OH$ oder

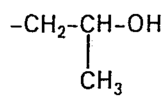

steht, z.B. Alkohole, Mercaptoalkanole und Glykole, welche die für die sinnvolle Durchführung des erfindungsgemässen Herstellungsverfahrens entscheidend wichtige Funktionalität an (prim. od. sek.) alkoholischen OH-Gruppen liefern.

Die Reaktion mit Glykol und oligomeren Glykolalkoholen wird bevorzugt in Anwesenheit eines geeigneten Katalysators z.B. Bortrifluoridätherat und mit einem Überschuss des Alkohols durchgeführt. Der überschüssige Alkohol wird vor der Umsetzung mit dem teilverkappten Polyisocyanat durch Vakuumdestillation entfernt. Im Grunde ist jede Reaktion geeignet, die die Ringöffnung des Epoxids unter einfachen Bedingungen gewährleistet. Das Abreagieren kleiner Epoxidreste gegen Ende der Umsetzung macht manchmal Schwierigkeiten, besonders wenn die Ringöffnung in einem vorgegebenen Äquivalenzverhältnis durchgeführt werden soll. Die Entfernung dieser Restmengen gelingt jedoch einfach mit $BF_3$-Katalysatoren unter Reaktion der Epoxidgruppe mit anwesenden OH-Gruppen.

Als hierfür geeignete Epoxidverbindungen kommen z.B. Polyepoxide mit 2–3 Epoxidgruppen im Molekül in Frage, wie z.B. Umsetzungsprodukte von mehrwertigen Phenolen, besonders solchen der Formel

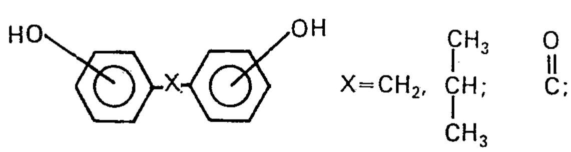

mit Epichlorhydrin. Andere Phenole sind z.B. Bis-(4-hydroxy-tert.-butylphenyl)-2-2-propan, Bis(2-hydroxynaphthyl)-methan und 1,5-Dihydroxynaphthalin oder «dimere» und Phenoladdukte des Cardanols. Aber auch die oben erwähnten Reaktionsprodukte von mehrwertigen Alkoholen wie z.B. Pentaerythrit, Trimethylolpropan oder Glycerin mit Epichlorhydrin sind hierfür geeignet. Andere geeignete Epoxidverbindungen sind epoxidierte Polybutadienöle, Epoxidharze aus 1,1-Methylen-Bis-(5-substituiertem) Hydantoin nach der US-A 3 891 097, Diepoxide aus Bisimiden nach der US-A 3 450 711 oder auch 1,3,5-Triglycidylisocyanurate.

Andere sehr geeignete Polyätherpolyole sind die Umsetzungsprodukte von Epoxidverbindungen mit Polyphenolen zu Polyätherphenolen, die anschliessend durch Entfernen der Phenolendgruppen mit Monoepoxidverbindungen wie Äthylenoxid oder Propylenoxid in Polyätherpolyole umgewandelt werden können. Dabei kann es manchmal vorteilhaft sein, die Äthoxylierung oder Propoxylierung mit einem Überschuss der Monoepoxidverbindungen durchzuführen und einen Teil der alkoholischen OH-Gruppen ebenfalls umzusetzen. Werden die Polyätherphenole vor der Umsetzung mit Monoepoxidverbindungen mit Formaldehyd methyloliert, so entstehen Polyätherpolyole, welche zusätzliche Benzylalkoholgruppen enthalten.

Die obengenannten Polyätherphenole lassen sich selbstverständlich auch aus Epichlorhydrin und entsprechenden Mengen Polyphenol nach den üblichen bekannten Verfahren herstellen.

Bringt man Di- oder Poly-Epoxidverbindungen mit einem Unterschuss (bez. auf die phenolischen OH-Gruppen) an Polyphenolen zur Reaktion, so erhält man höhermolekulare Epoxidharze, die als Einsatzstoffe sehr geeignet sein können, zumal sie gegenüber den Handelsprodukten einen durch Nebenreaktion mit alkoholischen OH-Gruppen bedingten, wunschgemäss beeinflussbaren Verzweigungsgrad aufweisen.

Andere geeignete Polyätherpolyole lassen sich aus Polyphenolen durch Äthoxylierung oder Propoxylierung darstellen, z. B. aus sogenannten Novolaken.

Eine andere Klasse von einsetzbaren Polyätherpolyolen erhält man durch Umsetzung von 3- bis 6-wertigen Alkoholen wie Trimethylolpropan, Pentaerythrit, Dipentaerythrit, Sorbit usw. mit Äthylen- und Propylen-Oxid, wobei die Alkohole in einem Maße mit den Monoepoxiden umgesetzt werden können, je nachdem, welcher Molekulargewichtsbereich für diese Ausgangsprodukte gewünscht wird.

Modifizierungsmöglichkeiten der Polyätherpolyole bestehen in der partiellen Veresterung mit ungesättigten Fettsäuren wie Leinöl-, Tallöl-, Rizinusöl-, Oiticicaöl-Fettsäuren usw. Ähnliche modifizierte Polyätherpolyole lassen sich auch durch völlige oder teilweise Umsetzung der Epoxidgruppen von Polyätherepoxiden, z.B. von Glycidyläthern des Diphenylolpropans, mit den genannten Fettsäuren herstellen. Unter den Bedingungen der Harzbildungsreaktion aus Umsetzungsprodukt (A) und Polyamin (B) muss dabei auch mit der teilweisen oder vollständigen Übertragung der Fettsäurereste auf das unverändert vorliegende oder bereits in Reaktion getretene Polyamin (B) durch Aminolyse gerechnet werden. Das gilt besonders für den 2. Fall der Modifizierungsmöglichkeit, bei den sogenannten Epoxidestern.

Eine weitere Modifizierungsmöglichkeit ist durch die Umsetzung des Epoxidharzes mit Cardanol, einem einen ungesättigten Alkylrest tragenden Phenolderivat, gegeben. Bei Cardanol handelt es sich im allgemeinen um ein Gemisch langkettiger 3-Alkylenphenole mit etwa 13 bis 17 Kohlenstoffatomen im Alkenylrest, z.B. 3-(8,11-Pentadekadienyl)-phenol. Der Einbau erfolgt dabei irreversibel über Phenyläthergruppen.

Die gegebenenfalls Thiogruppen enthaltenden Polyätherpolyole werden im Anschluss an ihre Herstellung mit halbverkappten Diisocyanaten oder teilverkappten Polyisocyanaten unter Bildung des verkappte Isocyanatgruppen enthaltenden Umsetzungsproduktes (A) umgesetzt. Ein entsprechendes Verfahren ausgehend von Epoxidharzen ist auch in der DE-A 2 71 425 beschrieben. Unter den in Frage kommenden Isocyanaten sind diejenigen besonders bevorzugt, deren Teil- bzw. Halb-Blockierung besonders selektiv verläuft. Dazu gehören Toluylendiisocyanate und Isophorondiisocyanat. Als Blockierungsmittel kommen die üblichen prim. sek. und tert. Alkohole, wie n- und iso- und tert.-Butanol, 2-Äthylhexanol, Äthylenglykolmonoäthyläther und Monoalkyläther von Polyglykolen, oligomere Addukte des Äthylenoxids oder Propylenoxids an Alkanole, Cyclohexanol sowie andere, z.B. die oben genannten Blockierungsmittel in Frage. Als besonders günstig hat es sich erwiesen, Mischungen zweier Blockierungsmittel einzusetzen, wobei diese jeweils so gewählt werden, dass sie entweder auf die Harzbildungsreaktion oder die Vernetzungsreaktion besonders abgestimmt sind.

Zwei derartige Substanzen sind z.B. Äthylglykol und 2-Äthylhexanol. Das Verhältnis der Blokkierungsmittel kann dabei so gewählt werden, dass in einem bestimmten Temperaturbereich in der 1. Phase der Reaktion eine bestimmte Anzahl Aminogruppen umgesetzt wird. Die Umsetzung der teilgeblockten Isocyanate mit den Polythiopolyolen erfolgt in der üblichen Weise, gegebenenfalls in einem auch gegenüber den reaktiven Gruppen des Umsetzungsproduktes (A) und des Polyamins (B) inerten Lösungsmittel in einem Temperaturbereich von 60 bis 130°C. Die alkoholischen OH-Gruppen des Polyätherpolyols werden dabei meistens soweit wie möglich in Urethangruppen überführt. Das führt bei erwünschter vollständiger Umsetzung der Reaktanden zu etwas längeren Reaktionszeiten. Dabei kann eine höhere Temperatur gegen Ende der Reaktion oder die Mitverwendung eines der üblichen Reaktionskatalysatoren wie z.B. Dibutylzinndilaurat nützlich sein. Der Endpunkt der Umsetzung wird angezeigt durch die Viskositätskonstanz des Ansatzes, er kann aber auch durch Titration der Isocyanatgruppen bestimmt werden. Im allgemeinen bricht man die Reaktion bei Erreichen von Isocyanatwerten zwischen 0,15–0,5 Gewichtsprozent, bezogen auf die Gesamtmenge des Umsetzungsproduktes (A), ab.

(B) Unter dem Begriff «Polyamin (B)» sind im allgemeinen Amine mit 2–20 primären und/oder sekundären Aminogruppen im Molekül zu verstehen. Die Aminogruppen können dabei Teil eines aliphatischen und/oder cycloaliphatischen Moleküls sein.

Neben diesen charakteristischen Gruppierungen können die Polyamine noch andere für bestimmte Produkteigenschaften wichtige Gruppierungen tragen, wie z.B. HO–; –O–;

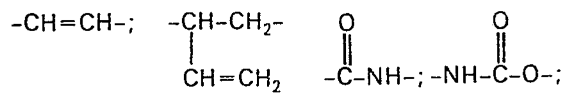

über Amidgruppen gebundene ungesättigte Fettsäurereste, dimere Fettsäurereste oder Umsetzungsprodukte des Cardanol/Epichlorhydrins-Additionsproduktes an Polyamine.

Im einzelnen seien als Polyamin (B) folgende Produkte genannt:

Diäthylentriamin, Dipropylentriamin; N,N′-Bis-(3-amino-propyl)-äthylendiamin, Bis-(6-aminohexyl)-amin; Tripropylentetramin, Tetrapropylenpentamin, Pentaäthylenhexamin, Hexamethylenheptamin usw., 4,4′-Diaminodicyclohexylmethan bzw. deren Derivate wie z.B. ihre Umsetzungsprodukte mit Epoxidverbindungen, z.B. den schon genannten Diglycidyläthern von Bisphenol A oder allgemein Polyglycidyläthern von Polyphenolen und mehrwertigen Alkoholen. Zum Teil ähnliche Produkte sind schon seit langem bekannt und beispielsweise in den US-PS 2 772 248 und 2 909 448 beschrieben worden. Diese Reaktion wird bevorzugt so ausgeführt, dass die umgesetzte Aminogruppe eine NH-Funktion behält.

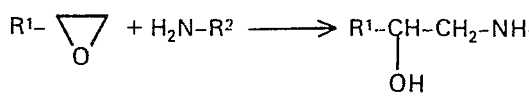
(I)

$R^2$ = Polyaminrest

Auf einfache Weise sind derartige Reaktionsbedingungen dadurch gewährleistet, das zum jeweiligen Reaktionsstand ein grosser Überschuss an Amin vorhanden ist und gegebenenfalls bei Anwesenheit eines inerten Lösungsmittels gearbeitet wird. Die überschüssigen Amine werden anschliessend durch Destillation entfernt.

Nach dem erfindungsgemässen Verfahren werden besonders bevorzugt Polyamine (B) auf der Basis von Umsetzungsprodukten aus Polyphenolen und Epichlorhydrin, insbesondere Bisphenol A, mit geblockte Isocyanatgruppen enthaltenden aliphatischen Polyätherpolyolderivaten [Umsetzungsprodukt (A)] zur Reaktion gebracht; dabei sollte die eingebaute Menge

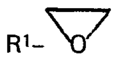 in Komponente (B) bezogen auf die Summe aus (A) und (B) zwischen 15 und 50 Gew.-% liegen.

Andere geeignete Epoxidverbindungen zur Herstellung von geeigneten Polyaminen nach der Reaktion (I) sind die Glycidyläther des schon erwähnten Cardanols, sowie der Diglycidyläther des Additionsprodukts von Phenol an Cardanol.

Andere geeignete Polyamine sind die hydrierten Produkte von Butadien/Acrylnitril-Copolymerisaten, bevorzugt solche mit Molekulargewichten von 500-5000. Ausserdem Polyäthylenimine und Polypropylenimine, sowie Polyaminoamide und Poylaminoimidazoline gesättigter oder ungesättigter (dimerer) Fettsäuren und Di- oder Tricarbonsäuren.

Besonders geeignet für das erfindungsgemässe Herstellungsverfahren sind Polyamine (B) mit 4-15 primären und/oder sekundären Aminogruppen. Dabei können die Produkte Molekulargewichte von 100-5000, bevorzugt 150-1500 aufweisen.

Umsetzungsprodukt (A) wird mit Polyamin (B) im allgemeinen in einem Gewichtsverhältnis von 9:1 bis 2,5:7,5, vorzugsweise 8,5:1,5 bis 4:6 umgesetzt.

Die nach dem erfindungsgemässen Verfahren hergestellten Bindemittel können mit üblichen Lacklösungsmitteln, wie Alkoholen von einer Kettenlänge $C_3$-$C_{16}$ z.B. Isopropanol, Dekanol, n-, und iso-Butanol, Alkylaromaten z.B. Toluol und Cycloaliphaten sowie mit (oligomeren) Glykolen und Glykoläthern oder wässrigen organischen Lösungsmittelgemischen verdünnt, gegebenenfalls zusammen mit Pigmenten, Füllstoffen und üblichen Hilfsmitteln unter Anwendung konventioneller Lackiermethoden, wie Spritzen, Tauchen, Fluten, auf das zu überziehende bzw. zu lackierende Substrat, wie z.B. auf Holz, Metall, Glas oder Keramik, aufgetragen, getrocknet und bei Temperaturen von über 170°C gehärtet werden. Die damit erhaltenen Überzüge zeichnen sich beispielsweise durch hohe Härte und Lösungsmittelbeständigkeit aus.

Bevorzugt werden die nach dem erfindungsgemässen Verfahren hergestellten Lackbindemittel jedoch mit Säuren, wie z.B. Phosphorsäure und ihren Derivaten, vorzugsweise mit wasserlöslichen Carbonsäuren, wie z.B. Essigsäure, Ameisensäure, Milchsäure, protoniert angewandt. Das protonierte Lackbindemittel ist wasserverdünnbar und kann unter Anwendung der oben angeführten konventionellen Lackiermethoden verarbeitet werden, wobei ebenfalls Überzüge mit sehr wertvollen Eigenschaften erhalten werden. Der Protonierungsgrad soll jedoch so gering wie möglich gehalten werden.

Die bevorzugte Verwendung der protonierten nach dem erfindungsgemässen Verfahren hergestellten Lackbindemitel ist die kathodische Elektrotauchlackierung elektrisch leitender Flächen, z.B. von Metallteilen, Blechen usw. aus Messing, Kupfer, Aluminium, Eisen und Stahl, die gegebenenfalls chemisch vorbehandelt, z.B. phosphatiert, sind.

Die wässrigen Lösungen oder Dispersionen der zumindest teilweise als Salz einer wasserlöslichen Carbonsäure vorliegenden Lackbindemittel können auch im Gemisch mit diesen durch Kataphorese elektrochemisch abscheidbare Hilfsstoffe enthalten, wie Pigmente, lösliche Farbstoffe, Lösungsmittel, Verlaufsverbesserer, Stabilisatoren, Härtungskatalysatoren, Antischaummittel sowie andere Hilfs- und Zusatzstoffe.

Die nach dem erfindungsgemässen Verfahren hergestellten Lackbindemittel können sowohl als Hauptträgerharz für die elektrische Abscheidung als auch als Anreibeharz in der Pigmentpaste benutzt werden. Besonders geeignet sind dann die Cardanol- und Fettsäure-modifizierten Bindemittel des Herstellungsverfahrens. Alternativ kann das Harz als Hauptträgerharz für die elektrisch abzuscheidende Masse in Kombination mit einer üblichen Pigmentpaste (z.B. nach DE-A 2606831) verwendet werden.

Zur kathodischen Elektrotauchlackierung wird im allgemeinen durch Verdünnen mit entionisiertem Wasser ein Feststoffgehalt des Elektrotauchbades von 5 bis 30 Gewichtsprozent eingestellt. Die Abscheidung erfolgt im allgemeinen bei Temperaturen von 15 bis 40°C während einer Zeit von 1 bis 2 Minuten und bei Bad-pH-Werten von 5,0 bis 10,2, vorzugsweise pH 6,0 bis 8,5, bei Abscheidungsspannungen zwischen 50 und 500 Volt.

Nach dem Abspülen von noch anhaftendem Badmaterial wird der auf dem elektrisch leitenden Körper kathodisch abgeschiedene Film bei etwa 160 bis 220°C 10 bis 30 Mintuen, vorzugsweise bei 170 bis 180°C 20 Minuten gehärtet.

Die erfindungsgemässen Überzugsmittel ergeben bei der kathodischen Abscheidung Überzüge mit hervorragenden mechanischen Eigenschaften, wie grosse Härte und Kratzfestigkeit, bei sehr guter Elastizität und fester Haftung auf dem Substrat.

Weiterhin zeichnen sich die damit erhaltenen Überzüge durch hohe Lösungsmittelbeständigkeit und Korrosionsbeständigkeit, z.B. im Salzsprühtest, aus.

Die in den Beispielen genannten Teile und Prozente sind, soweit nicht anders angegeben, Gewichtsteile bzw. Gewichtsprozente.

Beispiel 1

Zu 250,0 Teilen eines Diglycidyläthers aus Bisphenol A und Epichlorhydrin mit einem Epoxidwert von 0,2 gelöst in 63,0 Teilen Toluol werden 55,0 Teile frisch destilliertes Mercaptoäthanol bei einer Temperatur von 60-90°C während 30 Minuten zugetropft und weitere 90 Minuten bei 110°C gehalten. Anschliessend wird bei Wasserstrahlvakuum das Lösungsmittel und das überschüssige Mercaptoäthanol entfernt. Dabei steigt die Temperatur gegen Ende auf 120°C. Dann wird mit 193,0 Teilen Toluol verdünnt.

Dem auf diese Weise hergestellten Poly-thioätherol werden innerhalb einer Stunde bei 80°C

390,5 Teile eines halbblockierten Isocyanates aus 696,0 Teilen Toluylendiisocyanat 80/20 und 360,6 Teilen Äthylglykol zugetropft. Der Ansatz wird anschliessend 7,5 Stunden bei 80°C weitergerührt und mit 112,0 Teilen Toluol weiterverdünnt. Der Festgehalt der Komponente A beträgt 72,0%.

200,0 Teile der geblockte Isocyanatgruppen enthaltenden Komponente (A) und 70,0 Teile eines Polyaminoimidazolin aus «dimerer» Fettsäure und Polyaminen mit einer Aminzahl von 370-410 (z.B. Versamid® 140 der Schering AG) und 14,0 Teile eines Monoalkanols mit Alkylkettenlänge von $C_{12}$-$C_{14}$ werden 75 Minuten bei 100°C zur Reaktion gebracht und abgekühlt. Der Festgehalt beträgt 78,5%. 160,0 Teile des Harzes werden mit 2 Teilen Isodekanol versetzt, mit 4,3 Teilen Essigsäure protoniert und mit vollentsalztem Wasser auf einen Festgehalt von ca. 12% verdünnt.

Nach dem Rühren über Nacht bei Raumtemperatur werden auf eisenphosphatierten chromsäurenachgespülten Stahlblechen (z.B. Bonder® 1041 der Metallgesellschaft) bei 20 Volt/2 Minuten Abscheidungen durchgeführt (pH-Wert des Bades 7,85, Leitwert 1,98 s.cm$^{-1}$). Nach dem Einbrennen (20 Minuten bei 180°C) werden glatte Filme mit einer Schichtstärke von ca. 11 µm erhalten, die nach 720 Stunden Korrosionsprüfung nach DIN 50021 Korrosionswerte von 1-2 mm ergeben.

Beispiel 2

Zu einer Mischung aus 270 Teilen Glykol, 50 Teilen Äthylglykolacetat und 0,5 Teilen Bortrifluoridätherat werden im Abstand von jeweils 5 Minuten je 25,0 Teile (zusammen 250,0 Teile) eines Diglycidyläthers aus Bis-phenol A und Epichlorhydrin mit einem Epoxidwert von 0,2 bei 100°C zugesetzt. Nachdem der Ansatz 1 Stunde bei 100°C nachgerührt ist, wird bei Wasserstrahl-Vakuum destilliert, bis nichts mehr übergeht, dabei soll die Temperatur bis 170°C ansteigen.

Danach wird der Ansatz mit 185,0 Teilen Toluol verdünnt und in 2 Stunden 15 Minuten bei 90°C mit einem Gemisch aus 180,0 Teilen des unter Beispiel 1 genannten halbblockierten Toluylendiisocyanates und 150,0 Teilen eines halbblockierten Toluylendiisocyanates aus Toluylendiisocyanat 80/20 und 2-Äthylhexanol versetzt. Nach Zulaufende wird 1 Stunde bei 90°C weitergerührt, dann auf 120°C aufgeheizt und 3,5 Stunden bei dieser Temperatur gehalten und mit 81 Teilen Toluol verdünnt. Der Festgehalt des blockierte Isocyanatgruppen enthaltenden Polyätherpolyolderivates (Komponente A) beträgt 71%.

300,0 Teile der Komponente A werden mit 100,0 Teilen eines Polyaminoimidazolin aus «dimerer» Fettsäure und Polyamin mit einer Aminzahl von 370-410 (z.B. Versamid® 140 der Firma Schering AG) 2 Stunden bei 100°C zur Reaktion gebracht und dann mit 45,0 Teilen Methyläthylketon verdünnt und abgekühlt.

Ein Elektrotauchbad mit einem Feststoffgehalt von ca. 12% und einem pH-Wert von 7,1 wird erhalten aus 135,0 Teilen des 66,7%igen kathodisch abscheidbaren Bindemittels, 42,0 Teilen einer nachfolgend beschriebenen Pigmentpaste, 1,9 Teilen Dibutylzinndilaurat und 2,5 Teilen Essigsäure, wobei die Mischung mit vollentsalztem Wasser auf ein Volumen von 1000 Teilen verdünnt wird. Nach Rühren bei Raumtemperatur 48 Stunden werden dem Bad 6 Teile Isodekanol zugesetzt und nach einiger Zeit Abscheidungen auf phosphatierten Stahltafeln (Bonder 1041 der Metallgesellschaft) bei 250 Volt durchgeführt; dabei werden nach dem Einbrennen (20 Minuten/180°C) glatte Filme mit einer Schichtstärke von ca. 15 µm erhalten, die gute mechanische und korrosionsschützende Eigenschaften aufweisen.

Herstellung der Pigmentpaste, 333,0 Teile des Netzmittels II (nach DE-A 2606831) werden mit 340,0 Teilen Talkum, 166,0 Teilen Titandioxid, 100,0 Teilen Russ; 94,0 Teilen Butylglykol und 236,0 Teilen iso-butanol auf einem Dreiwalzenstrahl angerieben. Der Festgehalt der Pigment-Paste beträgt 80%; die Teilchengrösse ist kleiner 4 µm.

Beispiel 3

Eine Mischung aus 250 Teilen eines Diglycidyläthers aus Bisphenol A und Epichlorhydrin mit einem Epoxidwert von 0,2; 60 Teilen Cardanol und 1,25 Teilen Diäthanolamin werden unter Stickstoff auf 120°C erhitzt und 8 Stunden bei dieser Temperatur gerührt. Der Epoxidwert beträgt dann 0,038 und entspricht etwa 0,24 Mol Epoxidgruppen des Ansatzes. Zur Entfernung dieser restlichen Epoxidgruppen wird der Ansatz mit 9,0 Teilen frisch destillierten Mercaptoäthanols versetzt und nach 45 Minuten Reaktion bei 120°C mit 30,10 Teilen Toluol verdünnt.

Anschliessend werden zum Ansatz eine Mischung aus 86,3 Teilen des schon genannten mit Äthylglykol halbblockiertem und 103,5 Teilen mit 2-Äthylhexanol halbblockiertem Toluylendiisocyanates bei 90°C innerhalb einer Stunde zugetropft und 2 Stunden bei dieser Temperatur nachgerührt. Nach dem Verdünnen mit 70,0 Teilen Toluol beträgt der Festgehalt 70,5% (Komponente A).

200,0 Teile der Komponente A und 70,0 Teile eines Polyaminoimidazolins mit einer Aminzahl von 370-410 (z.B. Versamid 140 d. Firma Schering AG) werden 2 Stunden bei 100°C zur Reaktion gebracht und anschliessend mit 30,0 Teilen Methyläthylketon verdünnt. Der Festgehalt liegt bei 70,5%.

Ein Lackbad wird erhalten durch Verdünnen einer Mischung aus 126,0 Teilen des kathodisch abscheidbaren Harzes, 10,0 Teilen eines Monoalkohols mit einer Alkylkettenlänge von $C_{12}$-$C_{14}$, 2,0 Teilen Dibutylzinndilaurat, 2,2 Teilen Essigsäure und 103 Teilen einer wässrigen Pigmentanreibung entsprechend der nachfolgenden Zusammensetzung: 50,0 Teile des kathodisch abscheidbaren Harzes werden mit 1,3 Teilen Essigsäure protoniert und 180,0 Teilen vollentsalztem Wasser verdünnt, nach Zugabe von 40,0 Teilen Talkum, 18,0 Teilen Titandioxid, 8,1 Teilen Russ

wird der Ansatz in einer Kugelmühle bis zu einer Kornfeinheit kleiner 4 µm gemahlen.

Der Festgehalt beträgt 10%, der pH-Wert 7,2 und der Leitwert 1,15 s.cm$^{-1}$. Das Bad wird ca. 40 Stunden bei Raumtemperatur gerührt. Danach erhält man bei 100 Volt auf phosphatierten Stahlblechen abgeschiedene Filme, die nach dem Einbrennen (20 Minuten/180°C) glatte, korrosionsschützende und biegefeste Filme ergeben.

Beispiel 4

Eine Mischung aus 300,0 Teilen eines Diglycidyläthers aus Bisphenol A und Epichlorhydrin mit einem Epoxidwert von 0,1, 65 Teilen Leinölfettsäure, 2,5 Teilen frisch destilliertem Mercaptoäthanol und 50 Teilen Toluol wird unter Stickstoff 12,0 Stunden bei 120°C gerührt. Der Epoxidwert des Ansatzes beträgt dann 0,025. Zur Entfernung der Restepoxidgruppen werden 6,0 Teile Mercaptoäthanol zugesetzt und nach 30 Minuten mit 82,0 Teilen Toluol verdünnt.

Bei 90°C werden anschliessend je 125,0 Teile der in Beispiel 3 genannten Mischung zweier halbblockierter Toluylendiisocyanate in einer Stunde zugetropft. Der Ansatz wird 1 Stunde bei 90°C nachgerührt und dann 136,0 Teile Toluol und 0,5 Teile Dibutylzinndilaurat zugesetzt und 5 Stunden bei 90°C weitergerührt. Der NCO-Wert beträgt dann 0,28%. Nach dem Verdünnen mit weiteren 60 Teilen Toluol beträgt der Festgehalt der Komponente A, 73%.

Zur Herstellung eines kathodisch abscheidbaren Harzes werden 200,0 Teile der Komponente A mit 70,0 Teilen des in Beispiel 1 verwendeten Polyaminoimidazolin 2 Stunden bei 100°C umgesetzt und anschliessend mit 30,0 Teilen Methyläthylketon verdünnt. Der Festgehalt des Harzes beträgt 70,10%.

Ein Lackbad wird erhalten aus 164,0 Teilen des Harzes, 2,8 Teilen Dibutylzinndilaurat, 12,0 Teilen eines Mono-Alkanols mit einer Alkylkettenlänge von $C_{12}$–$C_{14}$; 3,0 Teilen Essigsäure und 149 Teilen der nachfolgend beschriebenen Pigmentanreibung. Die Mischung wird mit vollentsalztem Wasser auf einen Festgehalt von 12% verdünnt (pH-Wert 7,35; Leitwert 0,98 s.cm$^{-1}$).

Nachdem das Bad über Nacht bei Raumtemperatur gerührt ist, werden 10 Teile Isodekanol zugesetzt und eingerührt. Die Abscheidung wird bei 150 Volt auf eisen-phosphatierten, chromatgespülten und wärmegetrockneten Stahltafeln durchgerührt und ergeben nach dem Einbrennen (20 Minuten 180°C) glatte, fehlerfreie Überzüge (Schichtdicke 16 µm) mit einem Korrosionswert (DIN 50021) nach 10 Tagen von kleiner 0,5 mm und guten mechanischen Eigenschaften.

Beispiel 5

200,0 Teile der nach Beispiel 2 hergestellten Komponente A werden mit 100,0 Teilen der nachfolgend beschriebenen Komponente B in 22 Teilen Toluol 2 Stunden bei 100°C umgesetzt.

Anschliessend wird mit 30 Teilen Methyläthylketon verdünnt. Der Feststoffgehalt des kathodisch abscheidbaren Harzes beträgt 70,5%.

Die Komponente B wird wie folgt hergestellt: 300,0 Teile Diäthylentriamin (starker Überschuss) werden auf 70°C erwärmt, dann wird eine Lösung aus 350,0 Teilen eines Glycidyläthers aus phenolmodifiziertem Cardanol mit einem Epoxidwert von 0,184 (z.B. Dobekot E4 der Firma Beck of India) in 100,0 Teilen Toluol innerhalb einer Stunde zugetropft. Danach wird bei gutem Vakuum das Lösungsmittel und das überschüssige Amin durch Destillation soweit wie möglich entfernt. Dabei lässt man die Temperatur im Reaktionsgefäss langsam ansteigen und erreicht gegen Ende der Destillation eine Temperatur von ca. 180°C, die 30 Minuten gehalten wird. Das etwas dunkle halbfeste Produkt wird unverdünnt weiterverarbeitet.

Zur Herstellung eines Lackbades werden 126,0 Teile des kathodisch abscheidbaren Harzes mit 10,0 Teilen eines Monoalkanols mit einer Kettenlänge von $C_{12}$–$C_{14}$; 2,0 Teile Dibutylzinndilaurat, 1,5 Teile Essigsäure und 103,0 Teile einer nachfolgend beschriebenen wässrigen Pigmentmahlung gemischt: 50,0 Teile des kathodischen Bindemittels, protoniert mit 1,3 Teilen Essigsäure werden mit 180,0 Teilen vollentsalztem Wasser verdünnt und mit 34,0 Teilen Talkum, 18,0 Teilen Titandioxid, 8,1 Teilen Russ versetzt und in einer Kugelmühle bis zu einer Kornfreiheit von kleiner 4 µm gemahlen. Das Reibharz zeichnet sich durch eine besonders gute Netzwirkung beim Anreiben aus; die Anreibung weist ein besonders gutes Pigmenttragevermögen auf. Das fertige Lackbad besitzt einen Feststoffgehalt von 10%, einen pH-Wert 6,75 und Leitwert 1,04 s.cm$^{-1}$.

Nach 24stündigem Rühren des Bades werden 10 Teile Isodekanol eingerührt. Die Abscheidungen auf zink-phosphatierten, wassergespülten und luftgetrockneten Stahlblechen (Bonder 127 WL der Metallgesellschaft) bei 150 V vorgenommen, ergibt nach dem Einbrennen (20′/180°C) glatte Beschichtungen von einer Schichtdicke von ca. 18 µm, welche gute mechanische und korrosionsschützende Eigenschaften aufweisen. Nach DIN 50021 werden nach 15 Tagen Werte von kleiner 2 mm erreicht.

Beispiel 6

Zur Herstellung eines Polyätherpolyols werden zu 540,0 Teilen Glykol, 100,0 Teile Toluol und 1,0 Teil Bortrifluoridätherat 500,0 Teile eines Diglycidyläthers aus Bisphenol A und Epichlorhydrin in Portionen zu je 50,0 Teilen im Abstand von 5 Minuten bei 10°C zugegeben und 1 Stunde nachgerührt. Danach werden die flüchtigen Anteile bei Wasserstrahlvakuum soweit wie möglich entfernt (Innentemperatur des Ansatzes gegen Ende der Destillation 170–180°C). Nachdem 370,0 Teile Toluol zugesetzt sind, wird ein Gemisch aus 300,0 Teilen Äthylglykol halbblockiertem Toluylendiisocyanat 80/20 in 90 Minuten bei 90°C zugetropft und 3 Stunden bei 120°C weitergerührt. Danach liegt der NCO-Wert der Komponente A bei 0,20% der Festgehalt nach Verdünnen mit 161,0 Teilen Toluol bei 71%.

Zur Herstellung eines kathodisch abscheidbaren Bindemittels werden 200,0 Teile der Komponente A mit 100,0 Teilen des nachfolgend beschriebenen Polyamins (Komponente B) und 22,0 Teilen Toluol 3 Stunden bei 110°C umgesetzt und mit 30,0 Teilen Methyläthylketon verdünnt. Der Festgehalt des Harzes beträgt 72,5%.

Zur Herstellung des obengenannten Polyamins (Komponente B) werden zu 412,0 Teilen Diäthylentriamin bei 70°C 375,0 Teile eines Diglycidyläthers aus Bisphenol A und Epichlorhydrin mit einem Epoxidwert von 0,5 und 50,0 Teilen Toluol zugetropft. Die Entfernung des überschüssigen Amins wird analog Komponente B Beispiel 5 durchgeführt.

Zur Herstellung eines Elektrotauchbades werden 143,0 Teile des kathodisch abscheidbaren Harzes mit 2,5 Teilen Essigsäure protoniert und mit vollentsalztem Wasser auf ein Volumen von 1000 Teilen verdünnt (pH-Wert 7,7/30°C, Leitwert 1,4 $s.cm^{-1}$ bei 30°C).

Nach dem Rühren über Nacht bei Raumtemperatur werden auf phosphatbeschichteten Stahlblechen bei 200 V/2 Minuten, Abscheidungen durchgeführt. Nach dem Einbrennen (20 Minuten bei 180°C) werden sehr harte, glatte Filme einer Schichtstärke von ca. 13 μm erhalten.

Beispiel 7

In einem 5-l-Reaktor werden 511,0 Teile Diäthylenglykoldimethyläther und 323,7 Teile Epichlorhydrin vorgelegt; unter Rühren werden 1064,0 Teile Bisphenol A zugegeben und bei 60°C gelöst.

336,0 Teile 50%ige Natronlauge werden innerhalb 1 Stunde zugetropft. Dabei ist gute Kühlung notwendig, da die Reaktion stark exotherm verläuft.

Während der NaOH-Zugabe lässt man die Temperatur langsam auf 80°C ansteigen. Nach Zulaufende reagiert der Ansatz 1 Stunde bei 100°C nach. Danach werden 140,0 Teile Äthylenoxid auf den Ansatz gedrückt. Dabei senkt man die Innentemperatur auf ca. 80°C ab und lässt anschliessend 1 Stunde bei 85–90°C zu Ende reagieren. Anschliessend wird der Ansatz mit 50 ml Salzsäure conc. neutralisiert. Nach Zugabe von Toluol wird das Wasser ausgekreist und die Lösung filtriert. Der Festgehalt beträgt 55%.

950,0 Teile der Lösung werden ein Gemisch aus 257,5 Teilen eines Äthylglykol-halbblockierten und 296,5 Teilen eines 2-Äthylhexanol-halbblokkierten Toluylendiisocyanates bei 90°C innerhalb von 1,5 Stunden zugetropft und 1 Stunde nachgerührt und mit 28,0 Teilen Toluol verdünnt.

Der Festgehalt der Lösung der Komponente A beträgt 72,0%.

Zur Herstellung eines kathodisch abscheidbaren Bindemittels werden 195,0 Teile des geblockte Isocyanatgruppen enthaltenden Polyätherpolyol-Derivates mit 70,0 Teilen eines Polyaminoamids aus «dimeren» Fettsäuren und Aminen mit einer Aminzahl von 300 (z.B. Versamid 125 der Firma Schering AG) gemischt und 4 Stunden 15 Minuten bei 100°C zur Reaktion gebracht und dann mit 30,0 Teilen Methyläthylketon verdünnt. Der Festgehalt beträgt 69,0%.

Zur Herstellung eines Elektrotauchbades werden 145,0 Teile des Bindemittels mit 2,5 Teilen Essigsäure protoniert und mit vollentsalztem Wasser auf ein Volumen von 1000 Teilen verdünnt (pH-Wert 6,6 Leitwert 0,6 $s.cm^{-1}$). Nach dem Ausrühren über Nacht werden Abscheidungen (280 Volt/2 Minuten) auf phosphatierten Stahlplatten durchgeführt, die nach dem Einbrennen bei 180°C/20 Minuten glatte Überzüge mit einer Schichtdicke von 10 μm ergeben.

**Patentansprüche**

1. Verfahren zur Herstellung selbstvernetzender kathodisch abscheidbarer Elektrotauchlackbindemittel durch Umsetzung von gegebenenfalls Thiogruppen enthaltenden Polyätherpolyolen mit halbverkappten Diisocyanaten oder teilverkappten Polyisocyanaten, dadurch gekennzeichnet, dass die verkappte Isocyanatgruppierungen enthaltenden Umsetzungsprodukte (A) mit einem Polyamin (B), dessen Aminogruppen gegebenenfalls teilweise als Ketimingruppen vorliegen, so zur Reaktion gebracht werden, dass mindestens eine primäre und/oder sekundäre Aminogruppe des Polyamins (B) mit einer verkappten Isocyanatgruppe des Umsetzungsproduktes (A) eine Harnstoffgruppe bildet, und das selbstvernetzende Umsetzungsprodukt aus (A) und (B) in üblicher Weise durch Protonierung mit einer Säure in wasserverdünnbare Form überführt wird.

2. Verfahren nach Anspruch 1, dadurch gekennzeichnet, dass das verkappte Isocyanatgruppierungen enthaltende Umsetzungsprodukt (A) mit dem Polyamin (B) im Gewichtsverhältnis 9:1 bis 2,5:7,5 umgesetzt wird.

3. Verfahren nach Anspruch 1 oder 2, dadurch gekennzeichnet, dass die im selbstvernetzenden Umsetzungsprodukt aus (A) und (B) enthaltenen primären und/oder sekundären Aminogruppen und/oder Ketimingruppen Aminzahlen zwischen 20 und 200 ergeben.

4. Verfahren nach Anspruch 1 oder 2, dadurch gekennzeichnet, dass als Polyätherpolyol zur Herstellung des Umsetzungsproduktes (A) ein epoxidgruppenfreies Reaktionsprodukt aus Glycidyläthern von Di- oder Polyphenolen und einer Verbindung der Formel HXR verwendet wird, wobei X für O, S, $-[O-CH_2-CH_2-]_n$ oder

$$[-O-CH_2-\underset{\displaystyle CH_3}{\underset{|}{CH}}-]_n$$

steht, n eine ganze Zahl von 1 bis 3 bedeutet und R für einen Alkylrest mit 1 bis 12 Kohlenstoffatomen oder einen der Reste $-CH_2-CH_2-OH$ oder

$$-CH_2-\underset{\displaystyle CH_3}{\underset{|}{CH}}-OH$$

steht.

5. Verfahren nach Anspruch 1 oder 2, dadurch

gekennzeichnet, dass als Polyätherpolyol zur Herstellung des Umsetzungsproduktes (A) das Reaktionsprodukt aus einem äthergruppen-enthaltenden Di- oder Polyphenol mit einer Monoepoxidverbindung verwendet wird.

6. Verfahren nach Anspruch 1 oder 2, dadurch gekennzeichnet, dass als Polyätherpolyol zur Herstellung des Umsetzungsproduktes (A) ein epoxidgruppenfreies Reaktionsprodukt aus mindestens einem Glycidyläther eines Di- oder Polyphenols und Cardanol verwendet wird.

7. Verfahren nach Anspruch 1 oder 2, dadurch gekennzeichnet, dass zur Herstellung des Umsetzungsproduktes (A) ein epoxidgruppenfreies Umsetzungsprodukt aus Glycidyläthern mehrwertiger aliphatischer Alkohole, Polyätheralkohole oder aus epoxidierten Polybutadienölen, und einer Verbindung der Formel HXR verwendet wird, wobei X für O, S, $[-O-CH_2-CH_2-]_n$ oder

$[-O-CH_2-CH-]_n$
        |
      $CH_3$

steht, n eine ganze Zahl von 1 bis 3 bedeutet und R für einen Alkylrest mit 1 bis 12 Kohlenstoffatomen oder einen der Reste $-CH_2-CH_2-OH$ oder

$-CH_2-CH-OH$
        |
      $CH_3$

steht, und als Polyamin (B) ein Reaktionsprodukt aus einem Diglycidyläther auf der Basis eines mehrwertigen Phenols mit einem mehrwertigen Amin verwendet wird.

8. Verfahren nach Anspruch 1 oder 2, dadurch gekennzeichnet, dass als Polyätherpolyol zur Herstellung des Umsetzungsproduktes (A) ein Reaktionsprodukt aus einem 3- bis 6-wertigen Alkohol und Äthylenoxid oder Propylenoxid verwendet wird.

9. Verfahren nach Anspruch 1 oder 2, dadurch gekennzeichnet, dass zur Herstellung des Umsetzungsproduktes (A) ein mit einem primären, sekundären oder tertiären Alkohol halbverkapptes Toluylendiisocyanat verwendet wird.

10. Verfahren nach Anspruch 1 oder 2, dadurch gekennzeichnet, dass zur Herstellung des Umsetzungsproduktes (A) ein mit einem Alkylenglykolmonoalkyläther mit 1 bis 3 Alkylengruppen teilverkapptes Di- oder Polyisocyanat verwendet wird.

11. Verfahren nach einem der vorhergehenden Ansprüche, dadurch gekennzeichnet, dass zur Herstellung des Umsetzungsproduktes (A) ein teilverkapptes Di- oder Polyisocyanat verwendet wird, dessen Verkappungsmittel teilweise aus einem Phenol, Phthalimid, Imidazol oder einem Ketoxim bestehen, wobei diese Verkappungsmittel gegebenenfalls nach der Reaktion des Umsetzungsproduktes (A) mit Polyamin (B), dessen Aminogruppen in diesem Falle teilweise als Ketimingruppen vorliegen, mit einer Epoxidverbindung umgesetzt werden.

12. Verfahren nach Anspruch 1 oder 2, dadurch gekennzeichnet, dass das Umsetzungsprodukt (A) ein partiell mit ungesättigten Fettsäuren verestertes, verkappte Isocyanatgruppen sowie gegebenenfalls Thiogruppen enthaltendes Polyätherpolyol ist, dessen Fettsäurerest bei der Reaktion mit dem Polyamin (B) zumindest teilweise unter Aminolyse und Amidbildung auf das Polyamin (B) oder den Polyaminanteil des Umsetzungsproduktes aus (A) und (B) übertragen wird.

13. Verfahren nach Anspruch 1 oder 2, dadurch gekennzeichnet, dass als Polyamin (B) ein Umsetzungsprodukt eines mehrwertigen Amins mit dem Glycidyläther des Cardanols und/oder dem Diglycidyläther eines Phenoladduktes des Cardanols verwendet wird.

14. Verfahren nach Anspruch 1 oder 2, dadurch gekennzeichnet, dass das Polyamin (B) 4–15 primäre und/oder sekundäre Aminogruppen aufweist.

15. Verfahren nach Anspruch 1 oder 2, dadurch gekennzeichnet, dass das Polyamin B olefinisch ungesättigte Gruppierungen enthält und Molekulargewichte zwischen etwa 100 und 5000 aufweist.

**Claims**

1. A process for the preparation of self-crosslinking, cathodic electrocoating binders by reacting polyetherpolyols, which may or may not contain thio groups, with semi-blocked diisocyanates or partially blocked polyisocyanates, wherein the reaction products (A) containing blocked isocyanate groups, are reacted with a polyamine (B), some of whose amino groups may or may not be in the form of ketimine groups, in such a way that at least one primary and/or secondary amino group of the polyamine (B) form a urea group with a blocked isocyanate group of the reaction product (A) and the self-crosslinking reaction product of (A) and (B) is converted into a water-dilutable form in the conventional manner by protonization with an acid.

2. A process as claimed in claim 1, wherein the reaction product (A), containing blocked isocyanate groups, is reacted with the polyamine (B) in the weight ratio of from 9:1 to 2.5:7.5.

3. A process as claimed in claim 1 or 2, wherein the primary and/or secondary amino groups and/or ketimine groups contained in the self-crosslinking reaction product of (A) and (B) give amine numbers of from 20 to 200.

4. A process as claimed in claim 1 or 2, wherein the polyether-polyol used to prepare the reaction product (A) is an epoxide-free reaction product obtained from glycidyl ethers of diphenols or polyphenols and a compound of the formula HXR, where X is O, S, $[-O-CH_2-CH_2-]_n$ or

$[-O-CH_2-CH-]_n$,
        |
      $CH_3$

n is an integer from 1 to 3 and R is alkyl of 1 to 12

carbon atoms or is $-CH_2-CH_2-OH$ or

$-CH_2-CH-OH$
$\quad\quad\;|$
$\quad\quad CH_3$

5. A process as claimed in claim 1 or 2, wherein the polyether-polyol used to prepare the reaction product (A) is a reaction product obtained from a diphenol or polyphenol, containing ether groups, with a monoepoxide compound.

6. A process as claimed in claim 1 or 2, wherein the polyether-polyol used to prepare the reaction product (A) is an epoxide-free reaction product obtained from one or more glycidyl ethers of a diphenol or polyphenol and cardanol.

7. A process as claimed in claim 1 or 2, wherein an epoxide-free reaction product obtained from glycidyl ethers of polyhydric aliphatic alcohols, polyether-alcohols or epoxidized polybutadiene oils and a compound of the formula HXR, where X is O, S, $[-O-CH_2-CH_2-]_n$ or

$[-O-CH_2-CH-]_n,$
$\quad\quad\quad\quad|$
$\quad\quad\quad CH_3$

n is an integer from 1 to 3 and R is alkyl of 1 to 12 carbon atoms or is $-CH_2-CH_2-OH$ or

$-CH_2-CH-OH,$
$\quad\quad\;|$
$\quad\quad CH_3$

is used to prepare the reaction product (A), and a reaction product obtained from a diglycidyl ether, based on a polyhydric phenol, and a polyfunctional amine is used as the polyamine (B).

8. A process as claimed in claim 1 or 2, wherein the polyether-polyol used to prepare the reaction product (A) is a reaction product obtained from a trihydric, tetrahydric, pentahydric or hexahydric alcohol and ethylene oxide or propylene oxide.

9. A process as claimed in claim 1 or 2, wherein a toluylene diisocyanate semi-blocked with a primary, secondary or tertiary alcohol is used to prepare the reaction product (A).

10. A process as claimed in claim 1 or 2, wherein a diisocyanate or polyisocyanate partially blocked with an alkylene glycol monoalkyl ether containing from 1 to 3 alkylene groups is used to prepare the reaction product (A).

11. A process as claimed in any of the preceding claims, wherein a partially blocked diisocyanate or polyisocyanate, whose blocking agent in part consists of a phenol, phthalimide, imidazole or a ketoxime, is used to prepare the reaction product (A), and the said blocking agents may or may not be reacted with an epoxide compound after the reaction of the reaction product (A) with the polyamine (B), whose amino groups in that case are in part in the form of ketimine groups.

12. A process as claimed in claim 1 or 2, wherein the reaction product (A) is a polyether-polyol which is partially esterified with unsaturated fatty acids and which contains blocked isocyanate groups and may or may not contain thio groups, and during the reaction with the polyamine (B) the fatty acid radical of the said product (A) is at least partially transferred, with aminolysis and amide formation, onto the polyamine (B) or onto the polyamine portion of the reaction product of (A) and (B).

13. A process as claimed in claim 1 or 2, wherein a reaction product of a polyfunctional amine with the glycidyl ether of cardanol and/or the diglycidyl ether of a phenol adduct of cardanol is used as polyamine (B).

14. A process as claimed in claim 1 or 2, wherein the polyamine (B) contains from 4 to 15 primary and/or secondary amino groups.

15. A process as claimed in claim 1 or 2, wherein the polyamine B contains olefinically unsaturated groups and has a molecular weight of from about 100 to 5,000.

**Revendications**

1. Procédé de préparation de liant pour peinture par électro-déposition, déposable cathodiquement et autoréticulant, par réaction de polyétherpolyols, contenant éventuellement des groupes thio, avec des diisocyanates demi-masqués ou des polyisocyanates partiellement masqués, caractérisé par le fait que les produtis de réaction (A) contenant les groupements isocyanate masqués sont mis en réaction avec une polyamine (B), dont les groupes amino se trouvent, éventuellement partiellement, sous forme de groupes cétimine, de telle sorte qu'au moins un groupe amino primaire et/ou secondaire de la polyamine (B) forme un groupe urée avec un groupe isocyanate masqué du produit de réaction (A) et le produit de réaction autoréticulant de (A) et (B) est mis sous forme diluable dans l'eau, de manière usuelle par protonisation avec un acide.

2. Procédé selon la revendication 1, caractérisé par le fait que le produit de réaction (A) contenant les groupements isocyanate masqués est mis à réagir avec la polyamine (B) dans le rapport en poids de 9/1 à 2,5/7,5.

3. Procédé selon la revendication 1 ou 2, caractérisé par le fait que les groupes amino primaires et/ou secondaires et/ou les groupes cétimine, contenus dans le produit de réaction autoréticulant de (A) et (B), ont des indices d'amine compris entre 20 et 200.

4. Procédé selon la revendication 1 ou 2, caractérisé par le fait qu'on utilise, comme polyétherpolyol pour la préparation du produit de réaction (A), un produit de réaction, sans groupes époxy, d'éthers glycidyliques de di- ou polyphénols et d'un composé de formule HXR, X représentant O, S, $-(O-CH_2-CH_2-)_n$ ou

$(-O-CH_2-CH-)_n,$
$\quad\quad\quad\quad|$
$\quad\quad\quad CH_3$

n un nombre de 1 à 3 et R un reste alkyle ayant 1 à

12 atomes de carbone ou un reste $-CH_2-CH_2-OH$ ou

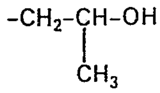

5. Procédé selon la revendication 1 ou 2, caractérisé par le fait qu'on utilise, comme polyétherpolyol pour la préparation du produit de réaction (A), le produit de réaction d'un di- ou polyphénol contenant des groupes éther, avec un composé monoépoxy.

6. Procédé selon la revendication 1 ou 2, caractérisé par le fait qu'on utilise, comme polyétherpolyol pour la préparation du produit de réaction (A), un produit de réaction, sans groupes époxy, d'au moins un éther glycidylique de di- ou polyphénol et de Cardanol.

7. Procédé selon la revendication 1 ou 2, caractérisé par le fait qu'on utilise, pour la préparation du produit de réaction (A), un produit de réaction, sans groupes époxy, d'éthers glycidyliques d'alcools aliphatiques polyvalents, de polyétheralcools ou d'huiles de polybutadiène époxydées, et d'un composé de formule HXR, X représentant O, S, $-(O-CH_2-CH_2-)_n$ ou

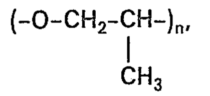

n un nombre de 1 à 3 et R un reste alkyle ayant 1 à 12 atomes de carbone ou un reste $-CH_2-CH_2-OH$ ou

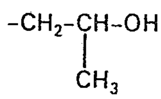

et, comme polyamine (B), on utilise un produit de réaction d'un éther diglycidylique à base d'un phénol polyvalent avec une amine polyvalente.

8. Procédé selon la revendication 1 ou 2, caractérisé par le fait qu'on utilise, comme polyétherpolyol, pour la préparation du produit de réaction (A), un produit de réaction d'un alcool tri- ou hexavalent et d'oxyde d'éthylène ou oxyde de propylène.

9. Procédé selon la revendication 1 ou 2, caractérisé par le fait qu'on utilise, pour la préparation du produit de réaction (A), un toluylènediisocyanate demi-masqué avec un alcool primaire, secondaire ou tertiaire.

10. Procédé selon la revendication 1 ou 2, caractérisé par le fait qu'on utilise, pour la préparation du produit de réaction (A), un di- ou polyisocyanate partiellement masqué, avec un éther monoalkylique d'alkylèneglycol à 1 à 3 groupes alkylène.

11. Procédé selon l'une des revendications 1 à 10, caractérisé par le fait que, pour préparer le produit de réaction (A), on utilise un di- ou polyisocyanate, partiellement masqué, dont l'agent de masquage est constitué partiellement d'un phénol, phtalimide, imidazole ou cétoxime, ces agents de masquage, éventuellement après la réaction du produit de réaction (A) avec la polyamine (B), dont les groupes amino sont, dans ce cas, partiellement sous forme de groupes cétimine, étant mis à réagir avec un composé époxy.

12. Procédé selon la revendication 1 ou 2, caractérisé par le fait que le produit de réaction (A) est un polyétherpolyol contenant des groupes isocyanate masqués, estérifiés partiellement avec des acides gras insaturés, ainsi qu'éventuellement des groupes thio, polyétherpolyol dont le reste acide gras, lors de la réaction avec la polyamine (B), est, au moins partiellement, transféré, avec aminolyse et formation d'amide, sur la polyamine (B) ou la partie polyamine du produit de réaction de (A) et (B).

13. Procédé selon la revendication 1 ou 2, caractérisé par le fait qu'on utilise, comme polyamines (B), un produit de réaction d'une amine polyvalente avec l'éther glycidylique de Cardanol et/ou avec l'éther diglycidylique d'un produit d'addition de phénol du Cardanol.

14. Procédé selon la revendication 1 ou 2, caractérisé par le fait que la polyamine (B) comporte 4 à 15 groupes amino primaires et/ou secondaires.

15. Procédé selon la revendication 1 ou 2, caractérisé par le fait que la polyamine (B) contient des groupements d'insaturation oléfinique et possède un poids moléculaire compris entre environ 100 et 5000.